# EUROPÄISCHE PATENTSCHRIFT

(11) **EP 1 870 682 B1**
(45) Veröffentlichungstag und Bekanntmachung des Hinweises auf die Patenterteilung: **12.08.2009**
(21) Anmeldenummer: 06116010.7
(22) Anmeldetag: 23.06.2006
(51) Int. Cl.: G01F 11/24, B65D 83/06

(54) **Portioniervorrichtung für eine Verpackung**
Measuring device for a package
Dispositif de dosage pour un emballage

(43) Veröffentlichungstag der Anmeldung: 26.12.2007
(73) Patentinhaber: Alcan Technology & Management AG, 8212 Neuhausen am Rheinfall (CH)
(72) Erfinder: Holzwarth, Gunther, 8280 Kreuzlingen (CH); Bossel, Daniel, 8200 Schaffhausen (CH); Kanscar, Peter, 8057 Zürich (CH)

(56) Entgegenhaltungen:
- EP-A- 1 621 477
- EP-A1- 0 787 979
- EP-A2- 0 175 314
- WO-A-20/05007539
- DE-A1- 4 421 518
- US-A- 934 182
- US-A- 2 321 869
- US-A- 3 204 833
- US-A- 4 013 198
- US-A- 4 562 940

## Beschreibung

### Technisches Gebiet der Erfindung

Die Erfindung betrifft eine Verpackung nach dem Oberbegriff des Anspruchs 1.

### Stand der Technik

Aus dem Stand der Technik sind eine Reihe von Vorrichtungen bekannt, die eine Abgabe von fliessfähigen Feststoffen gestatten. So zeigt die US 5,692,868 eine aufhängbare Vorrichtung mit einem verformbaren Vorratsbeutel, an dessen dann unterem Ende eine Abgabevorrichtung vorgesehen ist. Nach Öffnen des Auslasses gestattet diese Vorrichtung durch Verformen des Vorratsbeutels eine schnellere Gesamtabgabe, das heisst Leerung, des fliessfähigen Feststoffes nach unten.

Aus der WO 2005/007539 ist eine weitere solche Vorrichtung bekannt, bei der durch Schnüre das Öffnen des unteren Auslasses gesteuert wird.

Eine Portioniervorrichtung ist aus der EP 0 787 979 bekannt, bei der diese Abgabevorrichtung oder Austragsvorrichtung an die Kammer angeklipst wird. Durch Verdrehen eines Betätigungsorgans der Abgabevorrichtung um eine vertikale Achse, fällt Kammerinhalt je nach Stellung des Betätigungsorgans in eine von mehreren Portionierkammern, aus denen der Kammerinhalt durch weiteres Verdrehen aus einer Auslassöffnung entleerbar ist. Bei einer bestimmten Stellung des Betätigungsorgans sind sowohl die besagten Einlassöffnungen von Kammer und Abgabevorrichtung als auch die besagte Auslassöffnung bezüglich der vertikalen Achse fluchtend ausgerichtet, so dass Kammerinhalt ohne Dosierung direkt aus der Kammer fallen kann.

Die mechanischen Eigenschaften der Vorrichtung nach EP 787 979 machen einen Einsatz für die angesprochene Medikamentenabgabe sinnvoll. Gleiches gilt für die Abgabe von beispielsweise Gewürzen, wie es aus den im Recherchebericht zu der EP 787 979 genannten Dokumenten hervorgeht. Bei Verpackungen mit verformbarer Kammer, insbesondere, wenn diese volumenmässige Inhalte von mehreren Litern und Massen von mehreren Kilogramm aufweisen, insbesondere wenn diese für Produkte vorgesehen sind, die an einen Endverbraucher gerichtet sind, beispielsweise Verpackungen für Tierfutter oder Reinigungsmittel etc., sind die eingangs genannten Vorrichtungen unpraktisch und die überragenden Portioniereinrichtungen können schon an Verkaufsstellen beschädigt werden oder die verformbare Kammer des Vorratsbeutels beschädigen.

Aus US-A-4 013 198 ist ein Behälter mit einer Portioniereinrichtung der eingangs gennanten Art bekannt.

### Zusammenfassung der Erfindung

Ausgehend von diesem Stand der Technik liegt der Erfindung die Aufgabe zugrunde, die Portioniereinrichtung einer Verpackung der eingangs genannten Art für grössere Mengen an Produkten einsetzbar zu machen und insbesondere für Verpackungen, die eine verformbare Kammer bilden.

Diese Aufgabe wird erfindungsgemäss mit den Merkmalen des Anspruchs 1 gelöst.r

Die Verpackung hat eine zur Aufnahme eines rieselfähigen Produktes vorgesehene Kammer und eine an diese Kammer angrenzende Portioniereinrichtung. In Einsatzposition ist das Innenrohr im wesentlichen horizontal angeordnet, welches portioniereinrichtungsseitige Einlauföffnungen aufweist. Durch Drehung des Innenrohres um seine Hauptdrehachse können die Portioniereinrichtungsseitigen Einlauföffnungen entweder zeitlich hintereinander oder gleichzeitig mit der oder den kammerseitigen Einlauföffnungen und/oder der oder den Auslassöffnungen in mindestens teilweise fluchtende oder kongruente Übereinstimmung gebracht werden. Durch diese Drehung bilden diese Einlauföffnungen in einer offenen Stellung mindestens teilweise einen Durchlass zwischen Kammer und Portioniereinrichtung aus und in einer geschlossenen Stellung wird kein Durchlass zwischen Kammer und Portioniereinrichtung ausgebildet.

Darüber hinaus können Portionen in geeigneten Mengen, dosiert oder freifliessend, in einfacher Weise abgegeben werden. Es sind in einer Ausführungsform durch einfache Rotation des Drehknopfes feste Abgabemengen abgebbar. Bei entsprechendes Ausgestaltung des Innenrohrs kann auch eine durchgehende Abgabe vorgesehen sein. Ein Vorsehen einer Hülse für das Innenrohr ist auch eine voreinstellbare Abgabemenge realisierbar.

Schliesslich gestatten diese Merkmale die Realisierung eines Unversehrtheitsgarantieelementes durch einfaches Abdecken der entsprechenden Auslassöffnungen.

Weitere vorteilhafte Ausführungsbeispiele werden in den Unteransprüchen gekennzeichnet.

### Kurze Darstellung der Zeichnungen

Die Erfindung wird nachfolgend anhand von Ausführungsbeispielen im Zusammenhang mit den beigefügten Zeichnungen näher erläutert. Es zeigen:
Fig. 1 eine schematische teilweise geschnittene Seitenansicht einer Verpackung mit einer Portioniereinrichtung gemäss einem ersten Ausführungsbeispiel der Erfindung,
Fig.2 eine schematische teilweise geschnittene Seitenansicht eines unteren Abschnitts einer Verpackung mit einer Portioniereinrichtung gemäss einem zweiten Ausführungsbeispiel der Erfindung,
Fig. 3 eine schematische teilweise geschnittene perspektivische Ansicht einer nicht erfindungsgemässen Verpackung als Standbeutel mit einer Portioniereinrichtung, und
Fig.4 eine schematische teilweise geschnittene Seitenansicht einer nicht erfindungsgemässen Verpackung mit einer Portioniereinrichtung gemäss einem vierten im Einsatz.

### Ausführliche Beschreibung von Ausführungsbeispielen

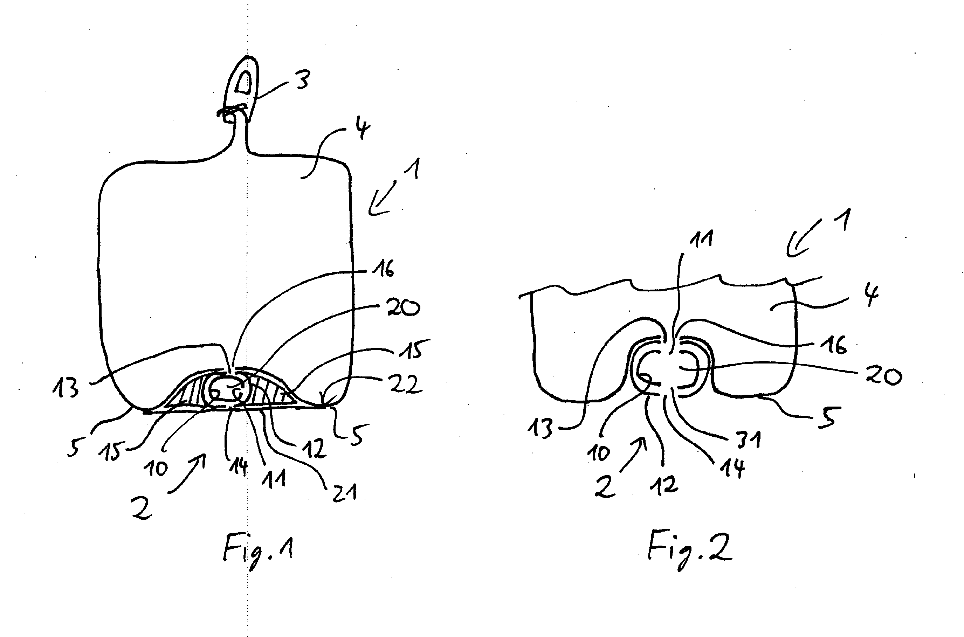

Die Fig. 1 zeigt eine schematische teilweise geschnittene Seitenansicht einer Verpackung 1 mit einer Portioniereinrichtung 2 gemäss einem ersten Ausführungsbeispiel der Erfindung. Mit dem Bezugszeichen 3 ist eine Trage- und Aufhängevorrichtung bezeichnet, an der eine eine Kammer bildende, beutelförmige Verpackung 4 befestigt ist. Die Aufhängevorrichtung 3 kann auch einen (oberen) Beutelverschluss beinhalten. Die Verpackung kann steif, halbsteif oder flexibel sein. Er kann als ein Sack, Faltbeutel, aus Faserstoff, Kunststofffolie oder einem anderen Werkstoff bestehen. Er kann transparent oder undurchsichtig sein. Anwendungsgebiete sind Nahrungsmittel, Reinigungsmittel und andere rieselfähige Güter. Solche Beutel werden im Einzelhandel häufig auf Paletten angeboten, so dass das Beutelmaterial einigen externen Einflüssen ausgesetzt ist. Dies gilt auch für die Portioniereinrichtung 2.

Die Verpackung 1 ist in der Fig. 1 in einer aufrechten Lage dargestellt, in welcher sie an der Vorrichtung 3 aufgehängt ist. So kann sie aber auch im Handel angeboten werden. Denn die Verpackung 1 steht dann auf zwei materialgefüllten Bereichen 5 der Kammer 4, die von der zylinderförmigen Portioniereinrichtung 2 getrennt sind. Insbesondere kann die Portioniereinrichtung 2 aus einem zentralen Rohr 10 mit mindestens einer longitudinal angeordneten Portionieröffnung 11 bestehen, die im Fig. 1 nach rechts gedreht ist. Das zentrale Rohr 10 ist mit wenig Spiel in einem Aussenrohr 12 geführt, welches über zwei gegenüberliegende Öffnungen 13 und 14 verfügt. Der Raum zwischen beiden gegenüberliegenden Öffnungen 13 und 14 wird von dem Innenrohr 10 eingenommen und dessen Innere bildet die Dosierkammer 20.

Das Aussenrohr 12 geht im dargestellten Ausführungsbeispiel seitlich vorteilhafterweise in Keile 15 mit einer flachen Unterseite über, die zu der oben erwähnten Stellfläche der materialgefüllten Bereiche 5 der Kammer 4 gehören. Die Keile 15 sind mit ihrer gewölbten Oberseite vorteilhafterweise mindestens teilweise mit der Kammerwand der Kammer 4 verklebt. Bei einem bevorzugten Ausführungsbeispiel bestehen mindestens Stege zwischen den beiden Keilen 15, mit anderen Worten, die Keile können einstückig ausgebildet sein.

Gegenüber der oder den Einlassöffnungen 13 in den Keilen 15 / dem Aussenrohr 12 liegen eine oder entsprechend mehrere kongruente Öffnungen 16, die im folgenden kammerseitige Einlassöffnungen 16 genannt werden.

Mit dem Bezugszeichen 21 ist ein Unversehrtheitsgarantieelement bezeichnet, welches hier als flächige Folie vorliegt, die mindestens an entsprechenden Haftbereichen 22 an den materialgefüllten Bereichen 5 anhaften. Es kann eine Lasche vorgesehen sein, um das Entfernen des Unversehrtheitsgarantieelementes 21 zu vereinfachen. Das Unversehrtheitsgarantieelement 21 kann auch an der Unterseite der Keile 15 und am Aussenrohr 12 befestigt sein. Das Bestehen dieser Folie am genannten Ort garantiert einem Kunden, dass die entsprechende Verpackung noch nie geöffnet worden ist, insbesondere wenn das Öffnen nicht reversibel ist; also beispielsweise eine abgehobene Folie nicht wieder befestigbar ist. Das Unversehrtheitsgarantieelement 21 kann auch aus anderen Materialien als einer Kunststofffolie bestehen, beispielsweise aus einem Steg zwischen Innenrohr 10 und der Umgebung, oder einer die Verpackung umgebende weitere Hülle. Dem Fachmann sind weitere Ausführungsformen bekannt.

Die Fig. 1 zeigt die aufgehängte Vorrichtung 1 vor dem Einsatz, also dem Entfernen des Unversehrtheitsgarantieelementes 21. Unter der Annahme, dass dies entfernt worden ist, erkennt man sofort, dass die kongruenten Öffnungen 13 und 16 eine oder mehrere Einlassöffnungen bilden, welche in der Fig. 1 vom Innenrohr 10 versperrt werden. Kammermaterial kann erst dann aus der Kammer 4 in die Dosierkammer 20 fliessen oder rieseln, wenn dieses Innenrohr 10, aus der Fig. 1 gesehen, um 90 Grad gegen den Uhrzeigersinn gedreht wird, so dass auch die Einlassöffnung 11 gegenüber den anderen genannten Öffnungen liegt. Dann füllt sich die Dosierkammer 20 mit Kammermaterial. Anschliessend wird das Innenrohr 10 um 180 Grad gedreht, so dass die vormalige Einlassöffnung 11 nun als Auslassöffnung gegenüber einer entsprechenden Auslassöffnung 14 des Aussenrohrs 12 steht.

Die Öffnung 14 kann auch helixförmig über einen gewissen Winkel kleiner als 180 Grad im Aussenrohr 12 vorgesehen sein, so dass eine Abgabe durch Drehen des Aussenrohrs 12 erreicht werden kann.

Die Fig. 2 zeigt eine schematische teilweise geschnittene Seitenansicht eines unteren Abschnitts einer Verpackung 1 mit einer Portioniereinrichtung 2 gemäss einem zweiten Ausführungsbeispiel der Erfindung. Gleiche Bezugszeichen bezeichnen in allen Fig. gleiche oder ähnliche Merkmale.

Neben dem Unterschied, dass hier das Unversehrtheitsgarantieelement 21 bereits entfernt ist, ist lediglich das Aussenrohr 12 an die Unterseite des Beutels 4 angehaftet; es gibt keine formführenden Keile 15. Das Innenrohr 10 hat hier im Unterschied zu Fig. 1 mindestens zwei gegenüberliegende Öffnungen 11 und 31, die je nach Anordnung gegenüber den kammerseitigen Einlassöffnungen 13 und der Auslassöffnung 14 als Durchführungsöffnungen 11 und 31 wirken, dass nämlich rieselfähiges Material aus der Kammer 4 durch die dann nur einen Durchführungshohlraum bildende Dosierkammer 20 aus der Portioniereinrichtung 2 entnommen wird.

Anstelle des vorteilhaften Einschliessens der Portioniereinrichtung 2 durch den Kammerbeutel 4 zum Schutze vor Beschädigungen, wie in Fig. 1 und Fig. 2 gezeigt, kann die Portioniereinrichtung 2 prinzipiell auch aussen an der Kammer 4 angeordnet sein.

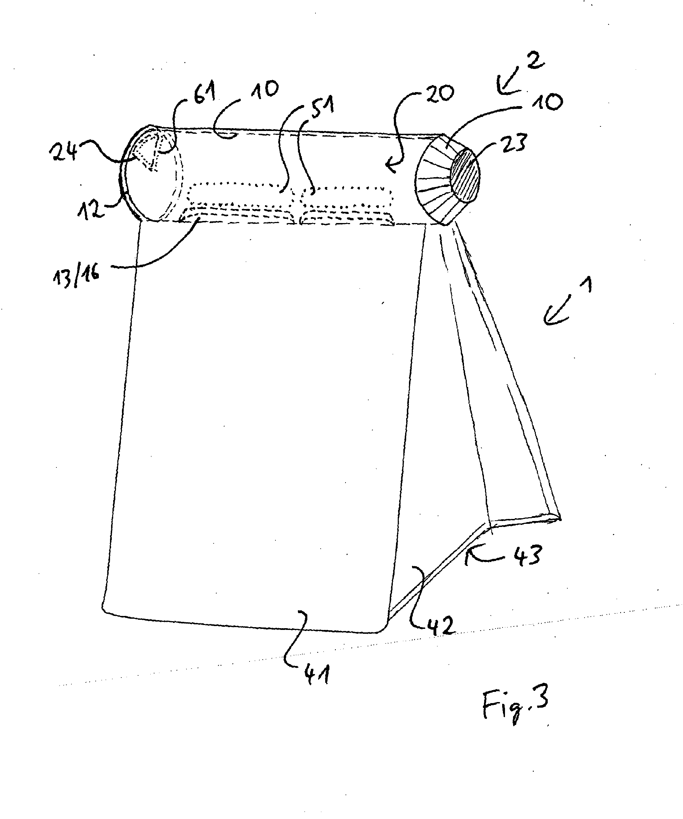

Fig. 3 zeigt eine schematische teilweise geschnittene perspektivische Ansicht einer Verpackung 1 als Standbeutel mit einer Portioniereinrichtung 2 gemäss einem nicht erfindungsgemässen dritten Ausführungsbeispiel.

Hier ist die Kammer 4 keilförmig, wobei die Portioniereinrichtung 2 den Abschluss des abgestumpften Keils bildet. Die Kammer 4 wird aus zwei seitlichen rechteckigen Folien 41 gebildet, die an den beiden Seiten über nach oben zusammengeführte Folien 42 geschlossen werden. Der Boden wird durch eine hier in der Figur nicht erkennbare, weil verdeckte Folie 43 gebildet, an der insbesondere eine Aufhängevorrichtung 3 angeordnet sein kann. Bei Lagerung, wie in der Fig. 3 dargestellt, steht der Beutel auf dieser Bodenfolie 43.

Die Portioniereinrichtung 2 besteht aus einem die ganze Breite der Kammer 4 einnehmenden Aussenrohr 12, welches an beiden Seiten von der Folie 41 bedeckt und gehalten sein kann. Die Verpackung 1 nach Fig. 3 ist mit ihren Elementen transparent dargestellt. Schematisch als eine Öffnung dargestellt sind die kammerseitige Einlassöffnung 16 und die Aussenrohröffnung 13, wobei hier in Longitudinalrichtung des Aussenrohrs 12 zwei solche Öffnungen in Gestalt von Langlöchern vorgesehen sind.

An dem Aussenrohr 12 ist an dem einen Ende ein es dichtend verschliessender Drehknopf 23 vorgesehen, der allerdings gegen das Aussenrohr 12 verdrehbar ist, da er an dem Innenrohr 10 befestigt ist. An dem gegenüberliegenden Ende des Aussenrohrs 12 ist in der das Rohr 12 abschliessenden Wand die seitliche Auslassöffnung 24 vorgesehen, die beispielsweise einen Kreisausschnitt oder Sektor, insbesondere von 45 Grad bildet. Ein allfälliges Unversehrtheitsgarantieelement wäre vorteilhafterweise dann über diesem Ende des Rohrs 12 angeordnet.

In dem Aussenrohr 12 ist wie gesagt ein Innenrohr 10 vorgesehen, welches an der einen Seite in dem Drehknopf 23 endet. An dem gegenüberliegenden Ende ist eine zu der seitlichen Auslassöffnung 24 kongruente seitliche Auslassöffnung 61 des Innenrohrs 10 vorgesehen. Mit dem Bezugszeichen 51 sind die beiden Einlassöffnungen bezeichnet, die in Kongruenz zu den Öffnungen 13/16 verdrehbar sind. In einem einfacheren Ausführungsbeispiel kann die Auslassöffnung 61 mit der abschliessenden Zylinderfläche nicht von einer Wand eines Aussenrohrs 12 mit einer Auslassöffnung 24 bedeckt sein. Dann kann diese Öffnung 61 auch nur noch mit einem Unversehrtheitselement abgedeckt sein.

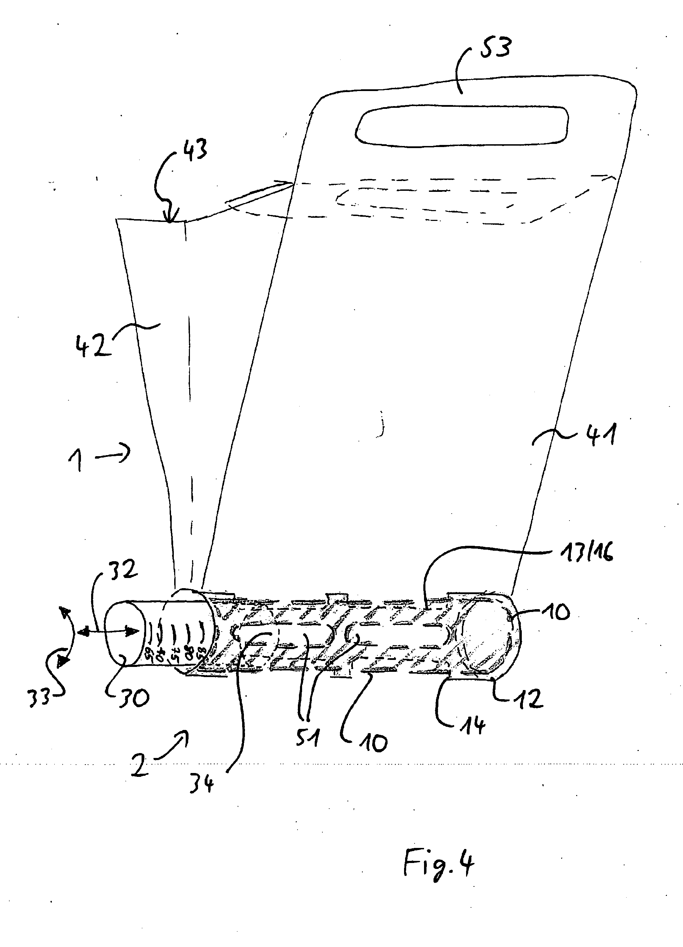

Damit ergibt sich auch sofort die Funktion dieses Ausführungsbeispieles. Nach Umdrehen und vorteilhafterweise Aufhängen der Verpackung 1 werden durch Betätigung des Drehknopfes 23 zuerst die Öffnungen 51 in Übereinstimmung mit den Öffnungen 13/16 gebracht, so dass sich der Hohlraum 20 im Innenrohr 10 mit dem rieselfähigen Produkt aus der Kammer 4 füllt. Sofern dann die Portioniereinrichtung leicht geneigt wird, kann nach einer Drehung des Innenrohrs 10 in die in der Fig. 4 gezeigten Lage das rieselfähige Produkt aus den Auslassöffnungen 24/61 abgegeben werden.

Fig. 4 zeigt eine schematische teilweise geschnittene Seitenansicht einer Verpackung 1 mit einer Portioniereinrichtung 2 gemäss einem nicht erfindungsgemässen vierten Ausführungsbeispiel im Einsatz und hängend an einem Aufhängebügel 53, der in strichlinierter Form auch vor seinem Einsatz an der Bodenfläche anhaftend dargestellt ist.

Die Portioniereinrichtung 2 verfügt wie in den vorherigen Ausführungsbeispielen über Einlassöffnungen 13/16 und Auslassöffnungen 14. In dem Aussenrohr 12 ist wiederum das Innenrohr 10 angeordnet, welches über die Öffnungen 51 verfügt. Diese können einfach hintereinander angeordnet sein, wie in Fig. 3; oder sie können auch einander gegenüberliegend angeordnet sein, wie dies in Fig. 2 dargestellt sind. Auf jeden Fall sind sämtliche im Zusammenhang mit einer Figur und einem Ausführungsbeispiel verbundenen Merkmale so zu verstehen, dass sie auch mit anderen Merkmalen aus den anderen Ausführungsbeispielen verbunden sein können, also beispielsweise in bezug auf Existenz von Keilen 15, Integration innerhalb der Beutelaussengrenzen und Bestehen von einem Unversehrtheitsgarantieelement.

Zusätzlich zu der Drehung (Pfeil 33) des Innenrohrs 10 kann eine mit diesem verbundene Hülse 30 vorgesehen sein, die eine axiale Verschiebung 32 zulässt. Die Hülse 30 kann wie dargestellt in das hohle Innenrohr 10 hineinragen oder kann dieses umfassen. Dabei kann die axiale Verschiebung 32 direkt oder durch Drehung in einem Gewinde vermittelt werden. Wesentlich ist, dass das vordere Ende der Hülse 30 als Blockierstössel 34 eingesetzt wird, welcher nach axialem Verschieben mindestens teilweise die Öffnungen 13/16 unabhängig von der Drehstellung des Innenrohrs 10 verschliessen kann, und/oder um das Volumen der Dosierkammer 20 begrenzt, um den Aus- und Durchfluss des rieselfähigen Materials zu reduzieren.

Es ist insbesondere aus den Fig. 3 und 4 erkennbar, dass auch Ausführungsbeispiele umfasst sind, bei denen die Portioniereinrichtung nachträglich an einer Verpackung angebracht wird. Mit anderen Worten; die Portioniereinrichtung kann ein separates Element sein, welches beispielsweise die rollenförmige Form in Fig. 3 aufweist. Eine beispielsweise einzige Einlassöffnung 13 ist dann beispielsweise nicht mehr ein einfaches Langloch, sondern umfasst, zum Beispiel radial, nach aussen gerichtete Zahnreihen, um bei einer Beutelverpackung eine kammerseitige Einlassöffnung 16 zu erzeugen. Es kann auch vorgesehen sein, dass der Boden einer Beutelverpackung aufgeschnitten wird und um eine entsprechende Spanneinrichtung der Portioniereinrichtung dichtend gespannt wird. Dann besteht keine kammerseitige Einlassöffnung 16 als solche, sondern die Aussenseite der Portioniereinrichtung bildet in Gebrauchsstellung den Boden der Beutelverpackung, wobei das rieselfähige Material direkt in die Einlassöffnung 13 fallen kann.

### Bezugszeichenliste

- 1: Verpackung
- 2: Portioniereinrichtung
- 3: Aufhängevorrichtung
- 4: Kammer
- 5: materialgefüllter Bereich
- 10: zentrales Rohr
- 11: Portionieröffnung
- 12: Aussenrohr
- 13: Einlassöffnung
- 14: Auslassöffnung
- 15: Keil
- 16: kammerseitige Einlassöffnung
- 20: Dosierkammer
- 21: Unversehrtheitsgarantieelement
- 22: Haftbereiche
- 23: Drehknopf
- 24: seitliche Auslassöffnung
- 30: Hülse
- 31: Durchführungsöffnung
- 32: axiale Verschiebung
- 33: Pfeil zur Drehung
- 34: Blockierstössel
- 41: rechteckige Fläche
- 42: Seitenfläche
- 43: Bodenfläche
- 51: Einlassöffnung
- 53: Aufhängebügel
- 61: seitliche Auslassöffnung

## Patentansprüche

1. Verpackung mit einer zur Aufnahme eines rieselfähigen Produktes vorgesehenen Kammer (4) und einer an diese Kammer (4) angrenzenden Portioniereinrichtung (2), wobei die Kammer (4) gegenüber der Portioniereinrichtung (2) mindestens eine kammerseitige Einlauföffnung (13, 16) aufweist, und wobei die Portioniereinrichtung (2) über mindestens eine Einlauföffnung (11, 31, 51) verfügt, die gegenüber der kammerseitigen Einlauföffnung (13, 16) so verdreht werden kann, dass diese Einlauföffnungen (11, 31, 51; 13, 16) in einer offenen Stellung mindestens teilweise einen Durchlass zwischen Kammer (4) und Portioniereinrichtung (2) ausbilden und in einer geschlossenen Stellung keinen Durchlass zwischen Kammer (4) und Portioniereinrichtung (2) ausbilden, wobei ein in Einsatzposition im wesentlichen horizontal angeordnetes Inrienrohr (10) vorgesehen ist, welches die portioniereinrichtungsseitigen Einlauföffnungen (11, 31, 51, 61) sowie mindestens eine dazu gegenüberliegende Auslassöffnung (14,24) aufweist, und dass durch Drehung des Innenrohres (10) um seine Hauptdrehachse diese portioniereinrichtungsseitigen Einlauföffnungen (11, 31, 51, 61) entweder zeitlich hintereinander oder gleichzeitig mit der oder den kammerseitigen Einlauföffnungen (13, 16) und/oder der oder den Auslassöffnungen (14, 24) in mindestens teilweise fluchtende oder kongruente Übereinstimmung bringbar sind,
**dadurch gekennzeichnet, dass**
dass Kammerwände der Kammer (4) aus biegsamem Material bestehen und auf beiden Seiten des Innenrohrs (10) eine Standfläche (5) bilden, und dass die Portioniereinrichtung (2) innerhalb der durch die Standflächen (5) begrenzten Bereiche in die Verpackung integriert ist.

2. Verpackung nach Anspruch 1, **dadurch gekennzeichnet, dass** der Bereich zwischen den Standflächen (5) mit einem Unversehrtheitsgarantieelement (21) abgedeckt ist.

3. Verpackung nach Anspruch 1 oder 2, **dadurch gekennzeichnet, dass** die Einlauföffnungen (11, 31, 51; 13, 16) und Austassöffnungen (14) als mindestens ein Langloch in longitudinaler Richtung des Innenrohrs (10) ausgestaltet sind.

4. Verpackung nach einem der Ansprüche 1 bis 3, **dadurch gekennzeichnet, dass** mindestens eine Auslassöffnung (24, 61) an einer Zylinderendfläche des Innenrohrs (10) ausgestaltet ist.

5. Verpackung nach einem der Ansprüche 1 bis 4, **dadurch gekennzeichnet, dass** ein Drehknopf (23) als Betätigungsorgan für das Innenrohr (10) an einer Zylinderendfläche des Innenrohrs (10) ausgestaltet ist.

6. Verpackung nach einem der Ansprüche 1 bis 5, **dadurch gekennzeichnet, dass** das Innenrohr (10) über eine innen oder aussen in Longitudinalrichtung des Innenrohrs (10) verschiebbare Hülse (30) verfügt, mit der mindestens Teile der Einlauföffnungen (11, 31, 51; 13, 16) abdeckbar sind, insbesondere aber das Volumen begrenzbar wird.

7. Verpackung nach einem der Ansprüche 1 bis 6, **dadurch gekennzeichnet, dass** das Innenrohr (10) von einem starren Aussenrohr (12) umgeben ist und geführt wird.

8. Verpackung nach einem der Ansprüche 1 bis 7, **dadurch gekennzeichnet, dass** die Kammer (4) verformbar ist, dass an dem einen, im Betrieb unteren Ende der Verpackung die Portioniervorrichtung vorgesehen ist oder vorgesehen werden kann, und dass an dem gegenüberliegenden Ende der Verpackung eine Aufhängevorrichtung (3, 53) vorgesehen ist.

## Claims

1. Packaging with a chamber (4) provided for accommodating a pourable material and a portioning means (2) adjacent to this chamber (4), the chamber comprising at least one inlet opening (13, 16) to the portioning means (2), and the portioning means (2) being provided with at least one inlet opening (11, 31, 51) which can be rotated relative to the chamber-side inlet opening (13, 16) in such a way that these inlet openings (11, 13, 51; 13, 16) in an open position at least partially form a passage between the chamber (4) and the portioning means (2) and in a closed position do not form a passage between the chamber (4) and the portioning means (2), an inner tube (10) which is arranged substantially horizontal in the use position being provided and comprising the inlet openings (11, 31, 51, 61) on the portioning means side as well as at least one opposite outlet opening (14, 24), and it being possible, by rotating the inner tube (10) about the main axis of rotation thereof, to bring these inlet openings (11, 31, 51, 61) on the portioning means side, one after another or simultaneously, into at least partially aligned or congruent agreement with the inlet opening(s) (13, 16) on the chamber side and/or with the outlet opening(s) (14, 24),
**characterised in that**
the chamber walls of the chamber (4) consist of flexible material and form a standing surface (5) on both sides of the inner tube (10), and **in that** the portioning means (2) is integrated into the packaging within the regions delimited by the standing surfaces (5).

2. Packaging according to claim 1, **characterised in that** the region between the standing surfaces (5) is covered by a damage prevention element (21).

3. Packaging according to either claim 1 or claim 2, **characterised in that** the inlet openings (11, 31, 51;13, 16) and outlet openings (14) are formed as at least one slot in the longitudinal direction of the inner tube (10).

4. Packaging according to any one of claims 1 to 3, **characterised in that** at least one outlet opening (24, 61) is formed on a cylindrical end surface of the inner tube (10).

5. Packaging according to any one of claims 1 to 4, **characterised in that** a rotary knob (23) is formed on a cylindrical end surface of the inner tube (10) as an actuating member for the inner tube (10).

6. Packaging according to any one of claims 1 to 5, **characterised in that** the inner tube (10) is provided with a sleeve (30) which can be displaced in the longitudinal direction of the inner tube (10) internally or externally and which allows at least parts of the inlet openings (11, 31, 51;13, 16) to be covered but in particular allows the volume to be limited.

7. Packaging according to any one of claims 1 to 6, **characterised in that** the inner tube(10) is surrounded and guided by a rigid outer tube (12).

8. Packaging according to any one of claims 1 to 7, **characterised in that** the chamber (4) is deformable, **in that** the portioning means is provided or may be provided at one end of the packaging, which is the lower end during use, and **in that** a suspension means (3, 53) is provided at the opposite end of the packaging.

## Revendications

1. Emballage comprenant un compartiment (4) prévu pour recevoir un produit particulaire susceptible de s'écouler librement, et un dispositif de portionnement ou de dosage (2) adjacent à ce compartiment (4), le compartiment (4) présentant par rapport au dispositif de portionnement (2) au moins une ouverture d'entrée (13, 16) côté compartiment, et le dispositif de portionnement (2) disposant d'au moins une ouverture d'entrée (11, 31, 51) que l'on peut faire tourner par rapport à l'ouverture d'entrée (13, 16) côté compartiment de façon à ce que ces ouvertures d'entrée (11, 31, 51 ; 13, 16) forment, dans une position d'ouverture, au moins partiellement un passage entre le compartiment (4) et le dispositif de portionnement (2), et, dans une position de fermeture, ne forment pas de passage entre le compartiment (4) et le dispositif de portionnement (2), l'emballage comprenant par ailleurs un tube intérieur (10), qui est agencé sensiblement à l'horizontale dans la position de service, et présente les ouvertures d'entrée (11, 31, 51, 61) côté dispositif de portionnement, ainsi qu'au moins une ouverture de sortie (14, 24) qui y est opposée, et, par rotation du tube intérieur (10) autour de son axe de rotation principal, ces ouvertures d'entrée (11, 31, 51, 61) du dispositif de portionnement peuvent être amenées, successivement dans le temps ou simultanément, à coïncider au moins de manière partiellement alignée ou congruente avec la ou les ouvertures d'entrée (13, 16) côté compartiment et/ou la ou les ouvertures de sortie (14, 24),
**caractérisé**
**en ce que** les parois de compartiment du compartiment (4) sont réalisées en un matériau flexible et forment des deux côtés du tube intérieur (10), une surface d'appui (5) pour poser l'emballage, et en ce que le dispositif de portionnement (2) est intégré à l'emballage, à l'intérieur des zones délimitées par les surfaces d'appui (5).

2. Emballage selon la revendication 1, **caractérisé en ce que** la zone entre les surfaces d'appui (5) destinées à poser l'emballage, est recouverte par un élément de garantie d'intégrité ou d'inviolabilité (21).

3. Emballage selon la revendication 1 ou 2, **caractérisé en ce que** les ouvertures d'entrée (11, 31, 51 ; 13, 16) et ouvertures de sortie (14) sont conçues sous la forme d'au moins un trou oblong dans la direction longitudinale du tube intérieur (10).

4. Emballage selon l'une des revendications 1 à 3, **caractérisé en ce qu'**au moins une ouverture de sortie (24, 61) est réalisée sur une surface d'extrémité de cylindre du tube intérieur (10).

5. Emballage selon l'une des revendications 1 à 4, **caractérisé en ce qu'**un bouton rotatif (23) est réalisé sur une surface d'extrémité de cylindre du tube intérieur (10), en tant qu'organe d'actionnement pour le tube intérieur (10).

6. Emballage selon l'une des revendications 1 à 5, **caractérisé en ce que** le tube intérieur (10) dispose d'une douille (30) qui peut coulisser à l'intérieur ou à l'extérieur dans la direction longitudinale du tube intérieur (10), et à l'aide de laquelle il est possible de recouvrir au moins des parties des ouvertures d'entrée (11, 31, 51 ; 13, 16), mais qui notamment peut limiter le volume.

7. Emballage selon l'une des revendications 1 à 6, **caractérisé en ce que** le tube intérieur (10) est entouré et guidé par un tube extérieur (12) rigide.

8. Emballage selon l'une des revendications 1 à 7, **caractérisé en ce que** le compartiment (4) est déformable, **en ce qu'**à une extrémité de l'emballage, située dans le bas en cours d'utilisation, est prévu ou peut être prévu le dispositif de portionnement (2), et **en ce qu'**à l'extrémité opposée de l'emballage est prévu un dispositif d'accrochage (3, 53).
